# EUROPEAN PATENT APPLICATION

(11) **EP 2 463 609 A2**
(43) Date of publication of application: **13.06.2012**
(21) Application number: 11183802.5
(22) Date of filing: 04.10.2011
(51) Int. Cl.: F28D 1/06, F28D 7/00, F28D 7/02

(54) **Modular waste water heat exchanger**

(30) Priority: 07.12.2010 EE 201000154 U
(71) Applicant: Resev, Meelis, 75401 Estonia (EE)
(72) Inventor: Resev, Meelis, 75401 Estonia (EE)
(74) Representative: Sarap, Margus

(57) **Abstract**

Modular waste water heat exchanger is a storage tank made up from one or several cylinder-shaped drums with a double-layer wall, and cooling pipelines. Between the double-layer wall and the basis cooling liquid circulates, which is cooled down by a heat pump. Modular waste water heat exchanger is connected to the building's waste water ducts, through which the building's waste water is conducted into the heat exchanger. Cooling the waste water is achieved by transmitting heat through a drum wall. Additional cooling capacity is provided by a spiral heat exchanger installed inside the drum. The drum comprises a waste water pump, with the help of which after cooling, waste water is pumped back into the waste water system of the settlement. A heat pump conducts the stored heat back to the heating system of the building.

## Description

### Technical Field

The present invention belongs to the field of heating systems, or more precisely, equipment for transferring wastewater heat energy into the heating system of a building.

### Background Art

A third of the heat energy of a building leaves the building through sewerage. This amount of energy contains the energy spent on heating the utility water, as well as cold water rise in pipelines and flush toilet pots. A lot of warm water comes out of apartment blocks, kindergartens, hotels, hospitals, industrial sites, and elsewhere. From state of art, we know different equipment for segregating heat from wastewater. In most cases, the denser fractions are segregated from sewage with the help of filters, after which the purified wastewater is conducted into heat exchangers. Such solution is described for example on Huber Technology Inc website [1].

Effluent heat exchanger [2] is an example of cooling down interior sewage pipelines, suitable for smaller private houses. As an example of capacious wastewater pipelines is effluent heat exchanger [3] for using in urban community net.

Also, various wastewater pump rooms can be brought out as the examples of similar solutions, for example pump rooms by AS Fertil for using in smaller private houses and in bigger settlement pipelines [4]. But such pump rooms do not enable emitting thermal energy from sewage.

Several known solutions are described also in patent documents. International patent application WO 2009/133018 A (HUBER SE) 05.11.2009 discloses wastewater heat exchanger having multiple heat exchanger elements running substantially in parallel, which each comprise multiple heat exchanger pipes. Japanese patent application JP 2006112671 A (HITACHI ENG SERVICE) 27.04.2006 provides a spiral hot wastewater heat exchanger. Vortex-type heat exchanger for use in heating system of hot-water supply apparatus, comprises bowl washing apparatuses which are provided in starting and winding ends of spiral flow paths. In the spiral hot wastewater heat exchanger having spiral pipes arranged in a plurality of rows in a spiral passage formed of a spiral partition plate arranged between an upper plate and a lower plate, high temperature water is communicated through the spiral pipes, and low temperature water is communicated through the spiral passage. US patent no US 5736059 B (MACKELVIE, WINSTON R) 07.04.1998 provides a system for recovering heat energy from draining wastewater and method of recovering heat from wastewater in a plumbing system for a building. Wastewater heat recovery device for new or existing buildings has heat automatically recovered, stored and transferred to cold feed-water of common hot water tank, using heat exchanger. A heat exchanger system is adapted to recover heat from waste water for the purposes of heating incoming cold water for separating liquid from a liquid containing composition such as encountered in wastewater.

The existing heat exchangers are usually very small (for example for installing in shower cubicles, cooled gangways or sewage ducts), or larger solutions for sewage utility lines or sewage plants treating waste waters. The disadvantage of such solutions is that they do not suit for using as intermediate versions in apartment blocks, for example.

### Summary of invention

The goal of the present invention is to offer a modular waste water heat exchanger which is more effective, reliable, with lower maintenance cost, a longer product life, and more favourable price for both new and existing buildings with the aim to return heat energy to the consumer.

Modular wastewater heat exchanger following the present invention is a storage tank made up from one or several cylinder-shaped drums with a double-layer wall, and cooling pipelines. Modular heat exchanger will be installed in the basement of a building or dug into the ground near the wastewater output of the building. Modular wastewater heat exchanger will be connected with the sewage pipelines of the building, along which wastewater will be flowing into the heat exchanger of the building. Modular heat exchanger tallies with different heat pumps, whereas for observing and managing the equipment complex an automatic system has been added, which enables, in case of need, to manage the process also from a distance.

For using in existing buildings, where the access is limited by the size of the doorway, the modular wastewater heat exchanger is according to one solution worked out from two or more drums connected with one another. The parts of the modular wastewater heat exchanger will be taken to the building separately and mounted at the site of installation. Modular wastewater heat exchanger will be installed in the basement, where all the wastewater ducts will be connected to. Warm wastewater will be collected into effluent heat exchangers and cooled down to the prescribed temperature with the help of the primary contour of the water-water heat pump. When wastewater has cooled down to a sufficient level, the sewage pump will be started up and wastewater will be pumped into the system of the settlement. The stored heat will be conducted with the help of a pump back to the heating- or utility water system.

An alternative realisation of a modular wastewater heat exchanger following the present invention is a drum that is equipped with a lid and a hollow basis, which will be installed in the ground onto the output of the wastewater of a private house. Thereby, additional heat will be obtained from the ground, and the efficiency of the heat pump collecting heat will be raised. The construction of the wall of the wastewater heat exchanger enables the heat exchanger, when installed into the ground, to collect thermal energy in addition to the effluent inside the wastewater heat exchanger also from the soil surrounding the wastewater heat exchanger.

### Brief description of drawings

The present invention is explained more precisely with references to figures added, where

fig 1 shows the plan of the modular wastewater heat exchanger according to the invention;

fig 2 shows the section of a side view of a modular wastewater heat exchanger embodiment according to the invention based on an example of one-drum realisation;

fig 3 shows the section of a side view of a modular wastewater heat exchanger alternative embodiment according to the invention based on an example of two-drum realisation has been depicted.

### Description of embodiments

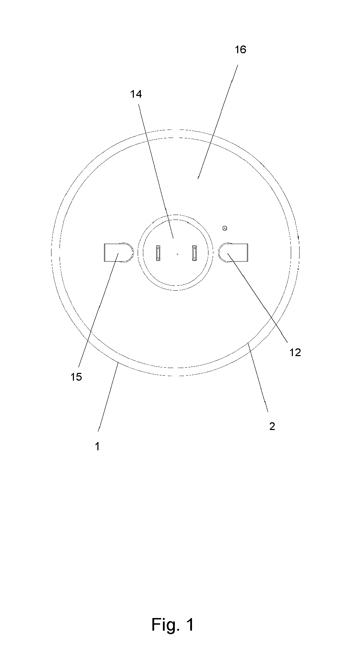

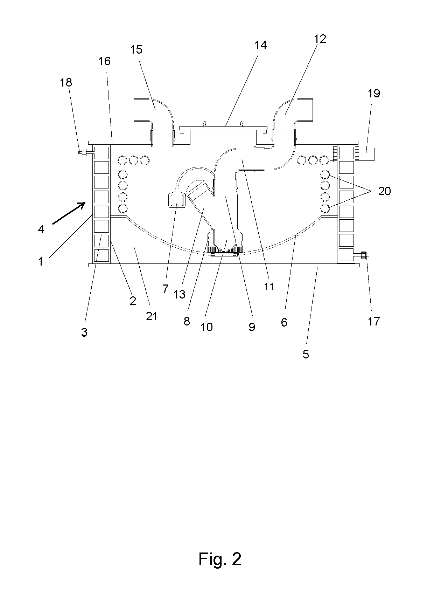

In the figures fig 1 and fig 2 are shown a modular heat exchanger according to the embodiment of the present invention, which comprises a double layer drum 4 formed from exterior wall 1, internal wall 2, and horizontal finned tubes 3 located in-between these walls, base 5 fixed to the lower part of the wall, a hollow basis 6, wastewater pump 8 set on the hollow basis and equipped with a float 7, compression ducts 9, the lower edge 10 of which is connected to wastewater pump 8, and the upper edge 11 of which is connected to wastewater output part 12, non-return valve 13 connected into compression duct, lid 16 of the maintenance trapdoor fixed to the upper end of the drum 4 wall, wastewater input part 15, and of wastewater output part 12, cooling liquid input 17 and output 18, wastewater spillway point 19, cooling ducts 20. Cooling liquid is directed between the exterior 1 and internal wall 2 of the double layer wall of the drum and finned tubes 3. Hollow basis 6 is attached to the drum in a way that between basis 6 and base 5 there is an empty space 21.

Cooling ducts 20 are installed spirally on the internal wall 2 of the drum 4. Cooling liquid is conducted into the cooling ducts 20 through a special input 17. The contour of the cooling ducts 20 is connected with the primary circle of the heat pump following water/water type. A cooling mantle for cooling the wastewater is formed from drum 4 double layer wall and cooling ducts 20. With the help of the heat pump and the cooling mantle the wastewater will be cooled to the desired temperature. When the necessary temperature is achieved, the cooled wastewater will be pumped with the help of a wastewater pump 8 through the compression ducts 9 and wastewater output part 12 into the wastewater system of the settlement. The stored heat will be conducted with the help of a heat pump back to the building's heating system. Interior modular wastewater heat exchanger is covered with thermal insulation materials in order to avoid heat bleedings. For carrying out maintenance works, the lid 16 of the wastewater heat exchanger is provided with maintenance trapdoor 14. To deal with break-downs, for example in case wastewater pump would not work, wastewater spillway point 19 has been added to the upper part of drum 4, which would lead wastewater out of the building, until the emergency situation is solved.

The basis 6 of wastewater heat exchanger is made hollow, which reduces the amount of sediments and prolongs maintenance intervals. With the help of spiral cooling ducts 20 inside wastewater heat exchanger wastewater is conducted to the upper layer by cooling wastewater in the warmest zone, thus guaranteeing the mixing of temperatures inside wastewater heat exchanger. As a result of mixing the temperatures, the cooled liquid will sink into the lower part and press warmer upwards. A wastewater heat exchanger fabricated following such realisation model is meant for example for mounting into the ground on a wastewater output.

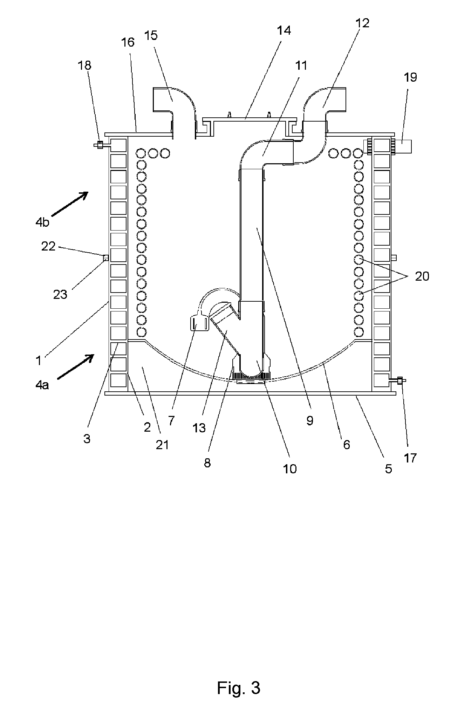

By alternative realisation of modular wastewater heat exchanger embodiment for exploitation in the interiors of existing buildings, e. g. in basements, the internal walls of the wastewater heat exchanger are made up from more than one double layered wall cylinder drums 4. In figure fig 3 the modular wastewater heat exchanger showed in figures fig 1 and fig 2, is formed from the lower drum 4a and upper drum 4b. The upper drum 4b is placed onto the lower drum 4a, and the lower part 22 of the upper drum 4b is fixed to the upper part 23 of the lower drum 4a.

Base 5 is fixed to the lower edge of the lower drum 4a. Hollow basis 6 is fixed to the lower part of the lower drum 4a in a way that there is an empty space 21 between basis 6 and base 5. The lid 16 of the maintenance trapdoor 14, wastewater input part 15, and of wastewater output part 12 is fixed to the upper edge of the wall of the upper drum 4b.

A wastewater pump 8 supplied with a float 7 is placed onto the hollow basis 6, and is connected to the lower edge 10 of compression ducts 9. The upper edge 11 of compression ducts 9 is connected to wastewater output part 12. Prior to the connection with wastewater output part 12 a non-return valve 13 is connected between wastewater output part 12 and the lower edge 10 of compression ducts 9. Cooling liquid input 17 is attached to the lower part of the wall of the lower drum 4a, and cooling liquid output 18 is attached to upper part of the wall of the upper drum 4b. Wastewater spillway point 19 is attached to upper part of the wall of the upper drum 4b.

According to the third realisation model, one or several drums, following the necessity, are additionally added between the lower drum 4a and upper drum 4b, in order to connect modular wastewater heat exchanger to larger wastewater systems. When increasing the volume of wastewater heat exchanger, also the cooling mantle has been magnified, and the compression ducts 9 have been lengthened correspondingly.

### References

[1] HUBER TECHNOLOGY INC, HTTP://WWW.HUBER-TECHNOLOGY.COM/PRODUCTS/ENERGY-FRO M-WASTEWATER. HTML

[2] Energy Recovery http://www.watercycles.ca/products.php

[3] Kasag Langnau AG, http://www.kasag.ch/DesktopDefault.aspx?tabindex=1&tabid=2247&langid =3

[4] AS Fertil http://www.fertil.ee/index.php?lang=est&main_id=38

## Claims

1. Modular wastewater heat exchanger, which comprises a drum (4) with a double layer wall, a base (5) of the wastewater heat exchanger, basis (6), wastewater pump (8) with a float (7), compression ducts (9), non-return valve (13), wastewater input part (15) and output part (12), lid (16), maintenance trapdoor (14), cooling liquid input (17) and output (18), wastewater spillway point (19), **characterized in that** the double layer of the drum (4) is composed of exterior wall (1) and internal wall (2), and horizontal finned tubes (3) placed in-between them, wastewater heat exchanger base (5) is attached to the lower edge of the double layer wall, above which the basis (6) of the wastewater heat exchanger is attached onto the drum (4), onto the basis a wastewater pump is placed, which is connected to the lower edge (10) of compression ducts (9), and the upper edge (11) of which is through a non-return valve (13) connected to wastewater output part (12), lid (16) is attached to the upper edge of the double layer wall of the drum (4), wastewater input part (15) and wastewater output part (12) are conducted through a lid (16), and that it additionally comprises cooling ducts (20).

2. Modular wastewater heat exchanger according to claim 1, **characterized in that** the cooling mantle has been formed from a double layer wall of the drum (4) and the cooling ducts (20) to cool down wastewater.

3. Modular wastewater heat exchanger according to claim 1, **characterized in that** the cooling ducts (20) are installed into the drum (4) onto its internal wall (2) spirally.

4. Modular wastewater heat exchanger according to claim 1, **characterized in that** the walls of the wastewater heat exchanger are made from two drums.

5. Modular wastewater heat exchanger according to claim 4, **characterized in that** the lower part (22) of the upper drum (4b) is attached to the upper part (23) of the lower drum (4a).

6. Modular wastewater heat exchanger according to claim 4, **characterized in that** basis (6) is attached to the lower part of the lower drum (4a).

7. Modular wastewater heat exchanger according to claim 4, **characterized in that** the base (5) is attached to the lower edge of the wall of the lower drum (4a).

8. Modular wastewater heat exchanger according to claim 4, **characterized in that** the lid (16) is attached to upper edge of the wall of the upper drum (4b).

9. Modular wastewater heat exchanger according to claim 4, **characterized in that** the cooling liquid input (17) is added to the lower part of the wall of the lower drum (4a).

10. Modular wastewater heat exchanger according to claim 4, **characterized in that** the cooling liquid output (18) is added to the upper part of the wall of the upper drum (4b).

11. Modular wastewater heat exchanger according to claim 4, **characterized in that** the wastewater spillway point (19) is added to the upper part of the wall of the upper drum (4b).

12. Modular wastewater heat exchanger according to claims 1 and 4, **characterized in that** the basis (6) is made hollow.

13. Modular wastewater heat exchanger according to claims 1 and 4, **characterized in that** the basis is fixed in a way that between the basis (6) and the base (5) an empty space (21) is left.
